# EUROPÄISCHE PATENTSCHRIFT

(11) **EP 2 588 247 B1**
(45) Veröffentlichungstag und Bekanntmachung des Hinweises auf die Patenterteilung: **20.08.2014**
(21) Anmeldenummer: 11716832.8
(22) Anmeldetag: 15.04.2011
(51) Int. Cl.: B05B 9/08, A01C 23/04, A01M 7/00, A62C 13/00, A62C 13/62, B05B 9/04, B05B 7/24

(54) **EINSATZ FÜR EINEN DRUCKBEHÄLTER MIT EINER ELEKTRISCHEN PUMPE UND DRUCKBEHÄLTER MIT EINEM DERARTIGEN EINSATZ**
INSERT FOR A PRESSURIZED CONTAINER WITH AN ELECTRIC PUMP, AND PRESSURIZED CONTAINER HAVING SUCH AN INSERT
INSERT POUR UN CONTENANT PRESSURISÉ COMPORTANT UNE POMPE ÉLECTRIQUE ET CONTENANT PRESSURISÉ COMPRENANT UN TEL INSERT

(30) Priorität: 07.07.2010 DE 202010009992 U; 30.06.2010 DE 102010025680
(43) Veröffentlichungstag der Anmeldung: 08.05.2013
(73) Patentinhaber: Kress, Markus, 89075 Ulm (DE)
(72) Erfinder: Kress, Markus, 89075 Ulm (DE)
(74) Vertreter: Sawodny, Michael-Wolfgang
(86) Internationale Anmeldenummer: PCT/EP2011/001924
(87) Internationale Veröffentlichungsnummer: WO 2012/000578

(56) Entgegenhaltungen:
- EP-A1- 0 663 242
- EP-A1- 1 949 972
- WO-A1-97/38869
- DE-A1- 2 036 571
- US-A- 5 931 207
- US-A- 6 109 548

## Beschreibung

Die Erfindung betrifft ein Drucksprühgerät mit einem Einsatz für einen Druckbehälter mit einer elektrischen Pumpe, insbesondere einer Membranpumpe, und einem Ausschalter.

Drucksprühgeräte für unterschiedliche Anwendungen sind aus einer Vielzahl von Druckschriften bekannt geworden, siehe z.B. EP 1 949 972 A1.

Ferner zeigt beispielsweise die DE-U 202 13 368 U1 ein Garten-Drucksprühgerät mit einem druckfesten Flüssigkeitsbehälter aus Kunststoff. Aus der DE 94 15 691.3 ist ein Drucksprühgerät, insbesondere ein Handfeuerlöscher oder Pflanzenschutzspritzgerät, bekannt geworden, das einen mit unter Druck stehendem Gas beaufschlagbaren Sprühmittelbehälter umfasst sowie einen am Sprühmittelbehälter angeschlossenen Schlauch mit einem einseitigen Ventil zum Ausbringen des Sprühmittels.

Aus der DE-U 84 20 577.2 ist ein tragbares Drucksprühgerät bekannt geworden, das sich dadurch auszeichnet, dass der Sprühmitteldruckbehälter mit einer oberen, durch eine einsetzbare Handpumpe verschließbaren Einfüllöffnung sowie Öffnungen für einen Druckanzeiger und für ein Überdruckventil sowie einer Anschlussöffnung für einen Sprühschlauch versehen ist. Nachteilig an sämtlichen zuvor genannten Drucksprühgeräten war, dass der Druck im Drucksprühgerät, der zum Ausbringen des Sprühmittels nötig war und bevorzugt im Bereich von 1,5 bis 1,6 bar liegt, insbesondere mit Hilfe einer Handpumpe aufgebaut wurde. Beim Sprühen verringert sich der Druck beim Ausbringen des Sprühmittels. Daher müsste im Stand der Technik nach einem bestimmten Zeitraum, über den das Sprühmittel ausgebracht wurde, durch Nachpumpen mit der Hand der Druck im Druckbehälter erneut erhöht werden.

Insbesondere bei großen Volumina war dies aufwändig.

Aufgabe der Erfindung ist es somit, die Nachteile des Standes der Technik zu überwinden und insbesondere ein Drucksprühgerät mit einem Einsatz anzugeben, der einen Ausbringdruck über einen längeren Zeitraum immer wieder aufbaut, ohne dass hierfür eine manuelle Betätigung mit einer Handpumpe notwendig ist.

Erfindungsgemäß wird diese Aufgabe dadurch gelöst, dass bei einem Einsatz für einen Druckbehälter mit einer elektrischen Pumpe, insbesondere einer Membranpumpe, und einem Ein-/Ausschalter für die elektrische Pumpe der Einsatz des weiteren einen Mikroschalter aufweist sowie eine Einrichtung zur Betätigung des Mikroschalters. Der Mikroschalter kann die elektrische Pumpe ein- und ausschalten. Die Einrichtung zur Betätigung des Mikroschalters ist derart aufgebaut, dass der Mikroschalter bei Überschreiten eines Maximaldrucks in dem Druckbehälter betätigt wird, wodurch die mittels des Ein-Aus-Schalters aktivierte elektrische Pumpe außer Betrieb gesetzt wird und bei Unterschreiten eines Minimaldruckes in dem Druckbehälter der Mikroschalter freigegeben wird, sodass die Pumpe erneut in Betrieb gesetzt wird. Bevorzugt beträgt der Maximaldruck ungefähr 2 bar und der Minimaldruck ungefähr 1,2 bis 1,3 bar, sodass durch den Einsatz, wenn dieser in einen Druckbehälter eingebaut wird, ein Ausbringdruck von etwa 1,5 bis 1,6 bar ohne manuelles Nachpumpen aufrechterhalten werden kann. Durch die Verwendung eines Mikroschalters kann das Bauteil zur automatischen Betätigung der elektrischen Pumpe sehr kompakt gehalten werden.

Erfindungsgemäß umfasst die Einrichtung zur Betätigung des Mikroschalters eine Membran, insbesondere eine Gummimembran, sowie einen Stößel und eine Druckfeder. Die Membrane, insbesondere die Gummimembrane, ist bevorzugt im Luftkanal vom Gasauslass zum Gaseinlass in den Behälter angeordnet. Erfindungsgemäß ist die Membran, der Stößel und die Druckfeder derart angeordnet, dass bei Überschreiten des Maximaldruckes in dem Druckbehälter durch Verformung der Membran der Stößel gegen die Federkraft der Druckfeder in eine vertikale Richtung innerhalb des Einsatzes bewegt und der oberhalb der Druckfeder in dem Einsatz angeordnete Mikroschalter mittels am Stößel angebrachten Anschlages betätigt und auf diese Art und Weise die Pumpe, die mittels des Ein-/Ausschalters aktiviert wurde, außer Betrieb gesetzt wird. Durch das Ausbringen des Sprühmittels wird der Druck im Druckbehälter vom Maximaldruck auf einen Minimaldruck abgesenkt. Sobald der Minimaldruck erreicht ist, ist die Vorrichtung beziehungsweise der Einsatz derart ausgestaltet, dass der Stößel aufgrund der Federkraft der Druckfeder in vertikaler Richtung bevorzugt nach unten bewegt wird, wodurch der Mikroschalter freigegeben wird. Ist der Mikroschalter freigegeben, so wird die elektrische Pumpe erneut in Betrieb gesetzt und erhöht den Druck innerhalb des Druckbehälters bis zum Maximaldruck. Ist der Maximaldruck erreicht, so wird durch Verformung der Membran der Stößel wiederum beispielsweise mit dem Anschlag gegen den Mikroschalter bewegt und die elektrische Pumpe ausgeschaltet.

Um die Membran justieren zu können, ist erfindungsgemäß eine Justageeinrichtung vorgesehen. Ganz besonders bevorzugt umfasst die Justageeinrichtung eine einstellbare Schraube. Durch die Justageeinrichtung kann der Druck, bei dem die Membran durch Verformung den Stößel bzw. den Anschlag des Stößels an den Mikroschalter drückt und damit auslöst, eingestellt werden. Beispielsweise wäre es möglich, dass die Membran bei 1,8 bar oder 2,0 bar den Mikroschalter auslöst.

Um ein Umkippen eines mit dem Einsatz versehenen Druckbehälters zu verhindern bzw. zu erschweren, kann bevorzugt der Schwerpunkt des Einsatzes durch ein Aufnahmegehäuse für eine elektrische Speichereinrichtung, die unterhalb der elektrischen Pumpe angeordnet ist, tiefer gelegt werden. Durch den tiefen Schwerpunkt wird eine deutlich erhöhte Standsicherheit gegenüber einer im Bereich der elektrischen Pumpe angeordneten elektrischen Speichereinrichtung, die beispielsweise Batterien oder Akkumulatoren umfassen kann, erreicht.

Um Kontaktsicherheit zu gewährleisten, ist in einer bevorzugten Ausführungsform vorgesehen, dass zur Herstellung eines elektrischen Kontaktes zwischen der Speichereinrichtung, das heißt dem Batteriefach und der elektrischen Pumpe, eine Kontakteinheit vorgesehen ist, insbesondere ein Kontaktniet, der in einem Material weitgehend wasserdicht insbesondere zu 100% wasserdicht eingeschlossen ist.

Der Einsatz kann in ein Drucksprühgerät bevorzugt im Bereich einer Öffnung anstelle einer Handpumpe eingesetzt werden.

Bevorzugt umfasst der Einsatz einen Gas-, insbesondere einen Luftauslass mit einer Öffnung zur Umgebung zum Ansaugen des Gases in den Einsatz und einem Gas-, insbesondere Lufteinlass aus dem Einsatz in den Druckbehälter, so dass über den Auslaß mit Hilfe der elektrischen Pumpe Gas, insbesondere Luft aus der Umgebung angesaugt, verdichtet und über den Gaseinlaß in den Druckbehälter abgegeben werden kann.

Neben der Vorrichtung stellt die Erfindung auch ein Verfahren zum Aufbau und zum Halten eines Ausbringdrucks für ein Drucksprühgerät zur Verfügung. Hierzu wird zunächst die elektrische Pumpe mit Hilfe des Ein- und Ausschalters aktiviert, das heißt angeschaltet. Es wird sodann mit Hilfe der Pumpe in dem Druckbehälter ein Maximaldruck von bevorzugt beispielsweise 2 bar aufgebaut. Sobald dieser Maximaldruck erreicht oder überschritten ist, wird mit Hilfe eines Mikroschalters die elektrische Pumpe außer Betrieb gesetzt. Sodann wird Sprühmittel ausgebracht, wodurch der Druck im Druckbehälter absinkt. Sobald der Druck im Druckbehälter einen Minimaldruck unterschritten hat von beispielsweise 1,2 bis 1,3 bar, wird der Mikroschalter freigegeben und die elektrische Pumpe erneut in Betrieb gesetzt. Die elektrische Pumpe erhöht nunmehr den Druck im Druckbehälter wiederum auf den Maximaldruck, bevor sie abgeschaltet wird und ermöglicht so ein ständiges Ausbringen des Sprühmittels ohne Unterbrechung durch Nachpumpen, da stets ein Druck zwischen einem Maximaldruck von beispielsweise 2 bar und einem Minimaldruck von beispielsweise 1,2 bar bis 1,3 bar aufrecht erhalten wird. Durch das Aufrechterhalten eines Druckes im Sprühbehälter zwischen dem Maximaldruck von 2 bar und dem Minimaldruck von 1,2 bis 1,3 bar wird ein mittlerer Ausbringdruck über die gesamte Ausbringzeit aufrecht erhalten. Dies führt zu einem sehr gleichmäßigen Sprühbild über die gesamte Ausbringzeit des Sprühmittels aus dem Druckbehälter. Bei Druckbehältern, bei denen beispielsweise mittels Handpumpen der Druck aufgebaut wurde, war aufgrund des hohen Anfangsdruckes von beispielsweise 3 bar und des niedrigen Enddruckes von beispielsweise 0,5 bar das Sprühbild unregelmäßig. Insbesondere musste aber der Sprühprozess unterbrochen werden, um den Druck im Sprühbehälter durch Nachpumpen erneut aufzubauen. Diese Arbeitsunterbrechung entfällt bei der erfindungsgemäßen Vorrichtung.

Nachfolgend soll die Erfindung anhand der Zeichnungen, ohne Beschränkung hierauf, näher beschrieben werden.

Es zeigen:
- Fig. 1a: einen Druckbehälter mit Handpumpe gemäß einer ersten Ausführungsform aus dem Stand der Technik für das Ausbringen von insbesondere verschäumten Sprühmitteln;
- Fig. 1b: einen Druckbehälter mit einer Handpumpe gemäß einer zweiten Ausführungsform aus dem Stand der Technik;
- Fig. 2: eine Gesamtansicht eines Einsatzes mit elektrischer Pumpe gemäß einer ersten Ausführungsform;
- Fig. 3: eine Detailansicht eines Einsatzes mit elektrischer Pumpe gemäß einer ersten Ausführungsform;
- Fig. 4a-4b: eine Detailansicht eines erfindungsgemäßen Einsatzes mit elektrischer Pumpe gemäß einer weiteren Ausführungsform;
- Fig. 5a-5b: eine Detailansicht eines erfindungsgemäßen Einsatzes mit elektrischer Pumpe gemäß eine weiteren Ausführungsform.

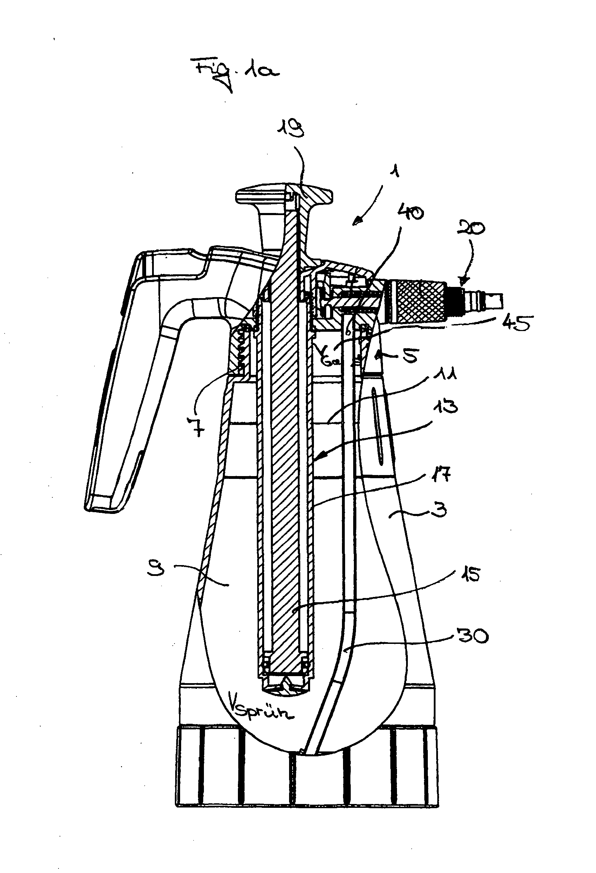

Figur 1a zeigt einen Drucksprüher bzw. ein Drucksprühgerät 1 gemäß dem Stand der Technik in einer ersten Ausführungsform mit einer Handpumpe im Schnitt. Das in Fig. 1a gezeigte Drucksprühgerät dient bevorzugt dem Ausbringen von verschäumter Flüssigkeit. Der Drucksprüher 1 umfasst einen Druckbehälter 3 sowie einen Sprühkopf 5. Der Sprühkopf 5 ist mit dem Druckbehälter 3 über eine Verschraubung 7 verbunden. Der Sprühkopf 5 kann von dem Druckbehälter 3 gelöst werden, um in das Innere des Druckbehälters 3 Sprühmittelflüssigkeit einzufüllen. Die Sprühmittelflüssigkeit kann bis maximal zum Füllstand 11 eingefüllt werden. Bevorzugt beträgt bei einer Ausgestaltung gemäß Fig. 1a das Volumen V_{Sprüh} des Sprühmittels bei maximalem Füllstand 1,25 l und das Volumen V_{Gas} des Gaspolsters 0,35 l. Das Gesamtvolumen der Vorrichtung wäre dann 1,6 l. Das Verhältnis des Volumens V_{Gas} des Gaspolsters zum Volumen V_{Sprüh} des Sprühmittels bestimmt, nachdem ein Druck im Drucksprühgerät aufgebaut wurde, die Ausbringzeit des Sprühmittels.

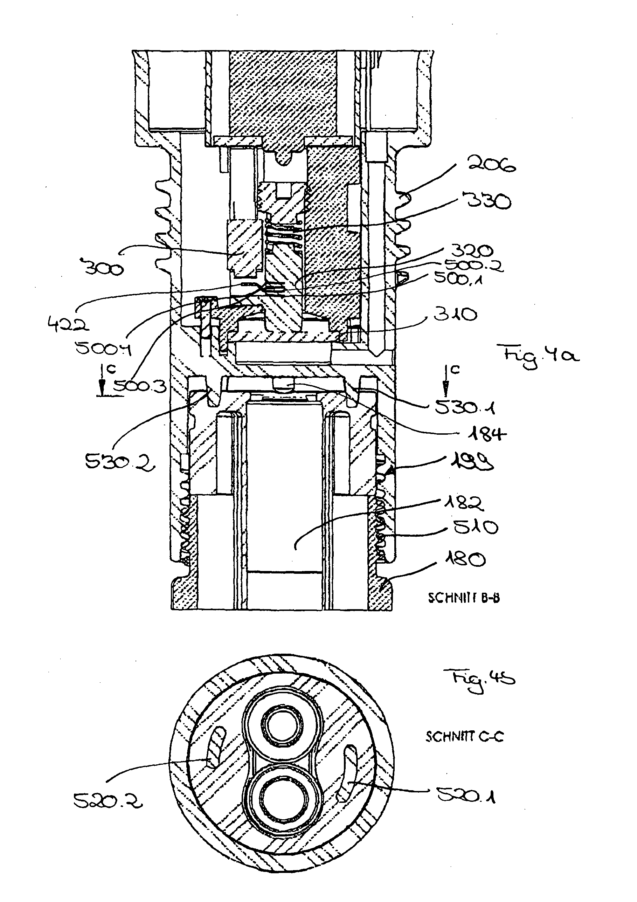

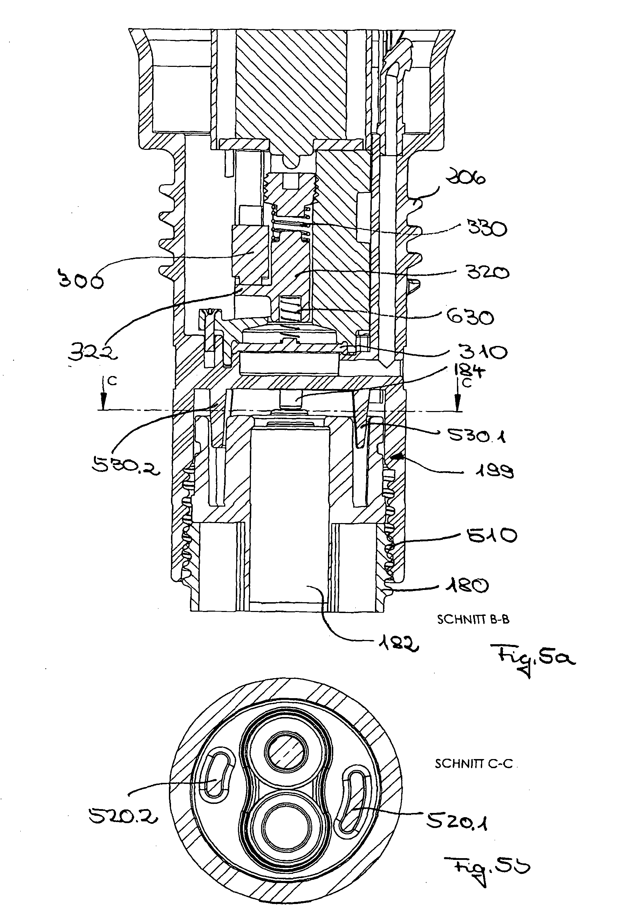

Bei der dargestellten Ausführungsform wird der Druck im Drucksprüher mittels einer Handpumpe aufgebaut. Gemäß der Erfindung wird die in Fig. 1a dargestellte Handpumpe durch einen erfindungsgemäßen Einsatz, wie in den Figuren 4 und 5 gezeigt, mit einer elektrischen Pumpe und einem Mikroschalter getauscht. Der Druckaufbau erfolgt dann anstelle von manuellem Pumpen mittels der in den in Fig. 4 und 5 dargestellten, in den erfindungsgemäßen Einsatz integrierten elektrischen Pumpe.

Durch das Ausbringen des Sprühmittels wird der durch die Handpumpe bzw. die elektrische Pumpe im erfindungsgemäßen Einsatz aufgebaute Druck abgebaut. Nach einem bestimmten Zeitraum muss daher durch Nachpumpen mit der Handpumpe bzw. der elektrischen Pumpe gemäß der Erfindung der Druck im Druckbehälter erneut erhöht werden, um ein Ausbringen der im Druckbehälter befindlichen Sprühmittelflüssigkeit wieder zu ermöglichen. Je größer das Gaspolster im Vergleich zum Volumen der Sprühlösung bzw. Sprühmittelflüssigkeit ist, umso länger kann der Zeitraum ab dem durch Nachpumpen der Druck wieder erhöht werden muss, gewählt werden. Da andererseits aber auch eine gewisse Sprühmittelmenge im Behälter vorhanden sein muss hat sich ein Verhältnis V_{Sprüh} des Sprühmittelvolumens bei maximalem Füllstand zu V_{Gas} des Gaspolsters also V_{Sprüh}/V_{Gas} zwischen 2 und 10 herausgestellt. Bei Einsatz eines Druckbehälters, wie in Fig. 1a gezeigt, mit einem Sprühkopf zur Verschäumung des im Druckbehälter enthaltenen Sprühmittels liegt das Verhältnis V_{Sprüh}/V_{Gas} zwischen 2 und 6, da zur Verschäumung Luft aus dem Gaspolster angesaugt wird.

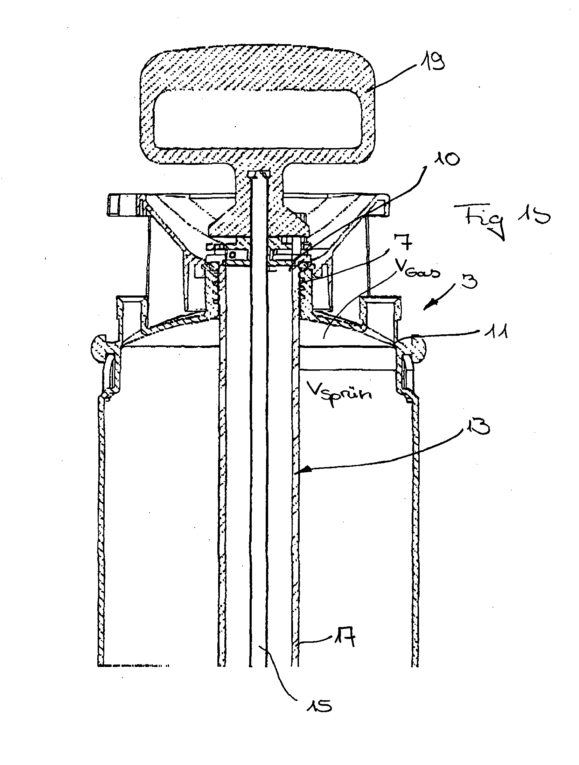

Die im Inneren 9 des Behälters befindliche Sprühflüssigkeit kann beim Stand der Technik mit Hilfe einer Handpumpe 13, die in das Innere des Druckbehälters 3 hineinragt, unter Druck gesetzt werden. Die in Fig. 1 dargestellte Handpumpe 13 umfasst einen in einer Wandung 17 gleitenden Ventilstößel 15, der mittels eines Griffes 19 hin und her bewegt wird.

Anstelle der Handpumpe 13 ist bei der Erfindung der erfindungsgemäße, in Fig. 4 und 5 gezeigte Einsatz mit einer elektrischen Pumpe eingebaut.

Bei dem Drucksprühgerät gemäß dem Stand der Technik weist der Sprühkopf 5 neben der Pumpe 13 eine Sprühdüse 20 auf, aus der das Sprühmittel ausgebracht wird. In der in Fig. 1a gezeigten speziellen Ausgestaltung eines Drucksprühgerätes ist vorgesehen, dass das Sprühmittel verschäumt ausgebracht wird. Um eine Verschäumung des Sprühmittels zu erreichen, kann, wie in der in Fig. 1 dargestellten Ausführungsform eine einstückige Ansaugvorrichtung vorgesehen sein. Die Ansaugvorrichtung weist oberhalb des Flüssigkeitsspiegels 11 eine Öffnung 40, hier in Form einer Bohrung, auf. Die oberhalb des Flüssigkeitsstandes 11 im Druckbehälter vorgesehene Öffnung 40 dient dazu, Gas, insbesondere die Luft aus dem Gaspolster 45 oberhalb des Flüssigkeitsstandes herauszunehmen und dem zur Sprühdüse 20 aus dem Sprühvolumen V_{Sprüh} hin geförderten Sprühmittel hinzuzuführen. Durch eine derartige Gas- bzw. Luftzufuhr kann eine Verschäumung des Sprühmittels realisiert werden. Eine Verschäumung ist insbesondere von Interesse für eine Anwendung im Reinigungsbereich. Wird der Druckbehälter beispielsweise zum Ausbringen eines Pflanzenschutzmittels eingesetzt, erfolgt im Allgemeinen keine Verschäumung. Eine derartige Ausgestaltung ist in Fig. 1b gezeigt.

In Fig. 1b werden für dieselben Bauteile dieselben Bezugsziffern wie in Fig. 1a verwandt.

Wiederum umfasst der Druckbehälter 3 eine Handpumpe 13, die in eine Verschraubung 7 eingeschraubt ist. Die Handpumpe 13 kann über die Verschraubung 7 mit dem Druckbehälter 3 verbunden werden. Über die Öffnung 10, die durch die Handpumpe 13 verschlossen wird, kann Sprühmittelflüssigkeit in den Druckbehälter 3 eingefüllt werden.

Im Gegensatz zur Ausgestaltung gemäß Fig. 1a, bei der ein relativ großes Gaspolster zur Verfügung gestellt wurde, um eine Verschäumung zu ermöglichen, kann, falls keine Verschäumung, wie bei der Ausgestaltung gemäß Fig. 1b gewünscht ist, ein wesentlich höherer Füllstand 11 eingefüllt werden. Bevorzugt beträgt bei einer Ausgestaltung gemäß Fig. 1b das Verhältnis des Volumens U_{Sprüh}/V_{Gas} etwa 3 bis 6 bei Verwendung einer Handpumpe. Beispielhaft ist das Volumen der Sprühflüssigkeit V_{Sprüh} 5l und das des Gaspolsters V_{Gas} 2l

Da bei der Ausgestaltung gemäß Fig. 1b eine Verschäumung nicht vorgesehen ist, weist die Ausgestaltung auch keine Öffnung auf, die dazu dient, Gas aus dem Gaspolster oberhalb des Flüssigkeitsstandes herauszunehmen und beispielsweise zu einer Sprühdüse zu führen.

Wie bei der in Fig. 1a dargestellten Handpumpe umfasst die Handpumpe einen Griff 19 und einen in einer Wandung 17 gleitenden Ventilstößel 15.

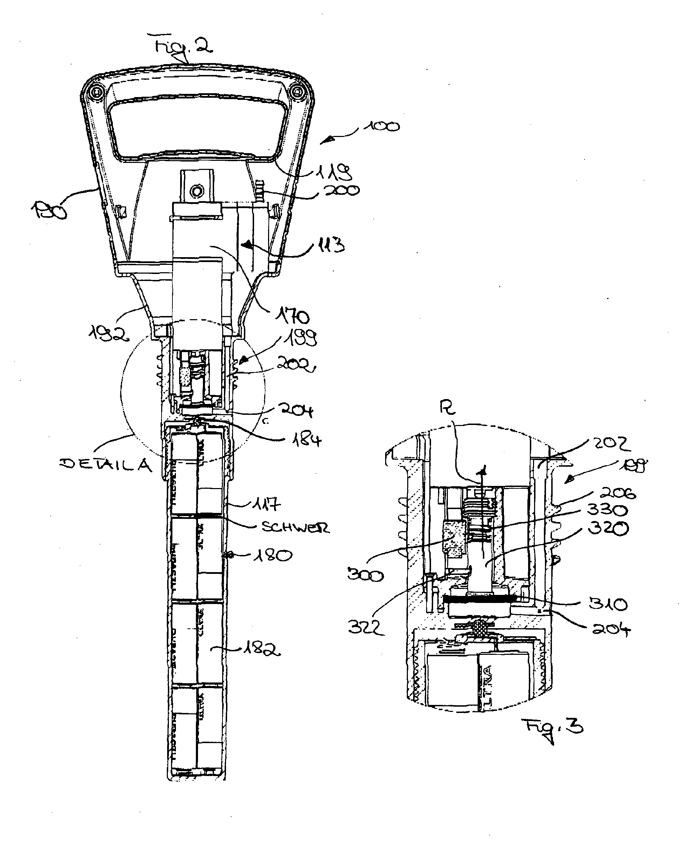

In den Figuren 2 und 4a-4b ist ein Einsatz dargestellt. Der Einsatz wird anstelle der in Fig. 1a und Fig. 1b dargestellten Handpumpe 13 in ein Drucksprühgerät, beispielsweise in die Verschraubung 7 eingebaut. Der Einsatz 100 umfasst einen Griff 119 sowie eine Wandung 117. Anstelle einer Handpumpe umfasst der Einsatz eine elektrisch betriebene Membranpumpe 113, die mittels eines Elektromotors 170 angetrieben wird. Die Membranpumpe 113 ist zwischen einem Gasauslass 200 und einem Gaseinlass 204 in einen Druckbehälter (nicht gezeigt) eingebracht. Der Antrieb der Membranpumpe erfolgt mittels des Elektromotors 170. Mittels der Membranpumpe 113 wird das Gas, insbesondere die Luft, vom Gasauslass 200 zum Gaseinlass 204 gefördert.

Das Funktionsprinzip der Membranpumpe 113 ähnelt dem der Kolbenpumpe, jedoch ist das zu fördernde Medium durch eine Membran vom Antrieb getrennt. Durch die Auslenkung der Membran, beispielsweise mit Hilfe des Elektromotors, wird über eine Öffnung Medium, beispielsweise Gas, angesaugt und durch Verformen der Membran in einen Druckbehälter gepumpt, wodurch der Druck beispielsweise im Druckbehälter ansteigt. Die Funktionsweise von Membranpumpen ist beispielsweise in der freien Enzyklopädie http://www.wikipedia.org/ unter dem Stichwort "Membranpumpen" beschrieben.

Die Details der Vorrichtung 199 zum Ein- und Ausschalten einer aktivierten Membranpumpe 113 sind in Fig. 3 detailliert gezeigt. Unterhalb der Vorrichtung 199 ist ein Gehäuse 180 vorgesehen, das Speichereinrichtungen, beispielsweise Batterien oder Akkumulatoren, beispielsweise NiMH-Akkumulatoren, umfasst. Die einzelnen in das Aufnahmegehäuse 180 eingebauten Speichereinrichtungen, insbesondere Batterien, sind mit Bezugsziffern 182 bezeichnet. Vorliegend nimmt das Aufnahmegehäuse 180 acht Speichereinrichtungen, vorliegend acht NiMH-Akkumulatoren auf. Im in ein Drucksprühgerät wie in Fig. 1 gezeigt eingebauten Zustand ragt das Aufnahmegehäuse 180 in den Druckbehälter und auch in die im Druckbehälter befindliche Sprühflüssigkeit hinein.

Zwischen dem Aufnahmegehäuse 180 mit den Speichereinrichtungen 182 und dem Gehäuse, das die Membranpumpe 113 sowie den Elektromotor 170 umfasst, ist eine Kontakteinheit eingebracht, die bevorzugt als Kontaktniet ausgebildet ist. Dadurch, dass der Kontaktniet 184 in das Material vollstandig eingegossen ist, ist der Kontakt weitgehend, d.h. bis fast 100 %, wasserdicht.

Durch das Aufnahmegehäuse 180 mit Speichereinrichtungen 182 unterhalb der Elektropumpe 170 wird der Schwerpunkt des Einsatzes 180 sehr tief gelegt, was bei Einbau in einen Druckbehälter dazu führt, dass dieser eine hohe Standfestigkeit auch in ungefülltem Zustand aufweist.

Seitlich am Griff 119 ist ein Ein-Aus-Schalter 190 angeordnet, mit dem die Elektropumpe 170 aktiviert werden kann. Die Elektropumpe 170 wird in einer Aufnahmeschale 192 aufgenommen. Des Weiteren dargestellt in Fig. 2 ist der Luftauslass 200. Die Luft, die über den Luftauslass 200 von der Membranpumpe 113 über den Luftkanal 202 angesaugt wird, wird über den Lufteinlass 204 in den Druckbehälter (nicht gezeigt) befördert. Die Verbindung vom Lufteinlass 200 zum Luftkanal 202 wird beispielsweise mittels einer Schlauchleitung (nicht gezeigt) zur Verfügung gestellt.

In Fig. 3 ist das Detail A aus Fig. 2 dargestellt. Deutlich zu erkennen ist das Gewinde 206, mit dem der Einsatz anstelle der Handpumpe in den Druckbehälter eingeschraubt werden kann. Des Weiteren zu erkennen ist bei der Vorrichtung 199 die Membran 310, der Stößel 320 mit Anschlag 322 sowie der Mikroschalter 300, der bei Erreichen eines bestimmten Druckes ausgelöst wird und die aktivierte elektrische Pumpe 170 abschaltet.

Bevorzugt ist die Membran 310 als Gummimembran ausgebildet. Oberhalb des Stößels 320 ist eine Druckfeder 330 ausgebildet. Ist die Membranpumpe eingeschaltet bzw. aktiviert wird Luft über den Luftauslass 200 (in Fig. 2 gezeigt) mittels der Membranpumpe in den Druckbehälter, in den der Einsatz eingesetzt ist, über den Lufteinlass 204 gefördert.

Mit dem Aktivieren über den Ein-Aus-Schalter 190 wird die Membranpumpe 113 in Betrieb gesetzt und über den Lufteinlass 204 so lange Luft über den Luftkanal 202 in den Behälter, in den der Einsatz eingesetzt ist, verbracht, bis im Behälter ein Maximaldruck, beispielsweise 2 bar, aufgebaut ist. Ist ein der Maximaldruck von beispielsweise 2 bar aufgebaut, so verformt sich die Membran 310 in vertikaler Richtung R und schiebt den Stößel 320 mit dem Anschlag 322 gegen die Federkraft der Feder 330 gegen den Mikroschalter 300. Dadurch, dass der Anschlag 322 an den Mikroschalter anschlägt, wird die elektrische Pumpe ausgeschaltet. Sobald nun Luft aus dem Behälter entnommen wird, sinkt der Druck, wie zuvor beschrieben, ab. Die Membran 310 verformt sich entgegen der Richtung R, und der Anschlag 322 des Stößels 320 gibt den Mikroschalter aufgrund der einwirkenden Federkraft der Feder 330 frei. Sobald der Mikroschalter freigegeben ist, wird die elektrische Pumpe 170 wieder angeschaltet. Der Druck, bei dem der Mikroschalter freigegeben wird, ist ein Minimaldruck, der bevorzugt im Bereich von 1,2 bis 1,3 bar liegt. Durch das Einschalten der Membranpumpe 113 wird nunmehr wieder der Druck aufgebaut bis zum Maximaldruck. Beim Maximaldruck wird wiederum mit Hilfe der Membran 310 der Stößel 320 mit dem Anschlag 322 angehoben und gegen den Mikroschalter 300 gedrückt, wodurch die Pumpe ausgeschaltet wird. Es kann nunmehr wieder ein Druckabfall durch das Ausbringen von Sprühmittel erfolgen.

Die Vorrichtung 199 zeichnet sich somit dadurch aus, dass nach Inbetriebsetzen der Elektropumpe mittels eines Ein-Aus-Schalter 190 selbsttätig ein mittlerer Druck von ungefähr 1,5 bis 1,6 bar automatisch aufrecht erhalten wird, und zwar dadurch, dass bei Unterschreitung eines Minimaldrucks der Mikroschalter die Membranpumpe freigibt, diese den Druck im Behälter auf einen Maximaldruck erhöht und bei Erreichen desselben die Membranpumpe 113 selbsttätig abgeschaltet wird. Das An- und Ausschalten der aktivierten Membranpumpe 113 mittels der Vorrichtung bzw. Einrichtung 199 sorgt dafür, dass ein im Wesentlichen konstanter Druck innerhalb des Druckbehälters, der zwischen 2 bar und 1,2 bar liegt, aufrecht erhalten wird. Auf diese Art und Weise wird ein kontinuierliches Ausbringen der Sprühflüssigkeit aus dem Druckbehälter mit im Wesentlichen gleichem Sprühprofil zur Verfügung gestellt.

In den Fig. 4a-4b ist eine erste alternative und erfindungsgemäße Ausgestaltung eines Einsatzes, wie in den Figuren 2 und 3 gezeigt, dargestellt. Wiederum handelt es sich hier um das in Fig. 3 dargestellte Detail A.

Gleiche Bauteile wie in Fig. 3 sind mit denselben Bezugsziffern gekennzeichnet.

Als Unterschied zu der Ausgestaltung gemäß Fig. 3 ergibt sich, dass der Stößel 320 keinen starren Anschlag 322 aufweist, sondern einen als Druckfeder ausgebildeten Anschlag 422 zur Betätigung des Mikroschalters 300.

Bei Verformung der Membran 310 und bei Überschreiten eines bestimmten Druckes wird wiederum der Stößel 320 gegen die Kraft der Feder 330 gedrückt, bis der nunmehr elastisch als Feder ausgebildete Anschlag 422 den Druckschalter erreicht und diesen ausschaltet. Da der Anschlag 422 elastisch ausgebildet ist, ergibt sich eine Verzögerung aufgrund der Verformung des elastischen Anschlages 422, wodurch eine Verzögerungszeit in Bezug auf das Ein- und Ausschalten des Mikroschalters 300 erzielt wird. Insbesondere ist diese Verzögerung wichtig, wenn der Mikroschalter freigegeben wird. Dies geschieht nicht schlagartig, sondern langsam. Gegenüber der in Fig. 3 dargestellten Ausführungsform mit starrem Anschlag hat ein weicher Anschlag, wie in Fig. 4a dargestellt, zur Folge, dass ein nicht so häufiges Aus- und Einschalten der Membranpumpe erfolgt und auf diese Art und Weise erheblich Energie eingespart werden kann.

Je nach dem, wann, d.h. bei welchem Druck der Mikroschalter 300 ausgelöst werden soll, sind im Stößel insgesamt vier Schlitze 500.1, 500.2, 500.3, 500.4 vorgesehen, in die der elastische Anschlag 422, der bevorzugt als elastisches Blatt bzw. Feder ausgeführt ist, eingesetzt werden kann.

Des Weiteren ist bei der Ausführungsform gemäß Fig. 4a-4b das Kontaktelement bzw. die Kontakteinheit 184 als Kontaktstift und nicht als Schleifkontakt ausgebildet. Des Weiteren sind das Aufnahmegehäuse 180 zur Aufnahme von Speichereinrichtungen 182 in dem Gehäuse 180 und die erfindungsgemäße Einrichtung 199 bzw. Vorrichtung mit diesem durch eine Überwurfmutter 510 verbunden. Die erfindungsgemäße Einrichtung 199 wird zusammen mit dem Aufnahmegehäuse 180 anstelle einer Handpumpe in ein Drucksprühgerät eingesetzt.

Wie in der Schnittdarstellung C-C in Fig. 4b ausgeführt, umfasst das Aufnahmegehäuse zwei Schlitze 520.1, 520.2 zur Aufnahme von Stiften 530.1, 530.2 des Einsatzes, womit eine Fixierung des Aufnahmegehäuses 180 bei der Montage des Aufnahmegehäuses an einer erfindungsgemäßen Vorrichtung 199 mit Hilfe der Überwurfmutter 510 gewährleistet wird. Beim Wechseln von Batterien bzw. Akkumulatoren im Aufnahmegehäuse tritt bei einer derartigen Ausgestaltung keinerlei Verschleiß an den Kontaktstellen 184 auf, im Gegensatz zu einer Ausgestaltung mittels eines Schleifkontaktes, wie in Fig. 3 dargestellt.

In den Figuren 5a bis 5b ist eine zweite alternative und erfindungsgemäße Ausgestaltung eines Einsatzes, wie in den Figuren 2 und 3 sowie 4a -4b gezeigt, dargestellt. Wiederum handelt es sich hier um das in Fig. 3 dargestellte Detail A. Gleiche Bauteile wie in den Figuren 3 und 4a-4b sind mit denselben Bezugszeichen gekennzeichnet.

Als Unterschied zu der Ausgestaltung gemäß den Figuren 4a-4b ergibt sich, dass der Stößel 320 zwar einen starren Anschlag 322, wie in Figur 3, aufweist, jedoch alternativ zu dem bei der Ausführungsform gemäß den Figuren 4a-4b elastisch als Feder ausgebildeten Anschlag 422 eine weitere Druckfeder 630 vorgesehen ist, die die Membran 310 elastisch mit dem Stößel 320 verbindet.

Durch das Einbringen einer weiteren Druckfeder 630 zwischen der Membran und dem Stößel wird zum einen bei Druckaufbau in der Membran der Stößel bei Überschreiten eines bestimmten Druckes nicht schlagartig mit dem Anschlag 322 gegen den Druckschalter bewegt, sondern langsam. Ebenso wird bei Unterschreiten eines bestimmten Druckes die Membran nicht schlagartig in die Ausgangsposition zurück bewegt, sondern mit einer gewissen Verzögerung aufgrund der Verformung der weiteren Druckfeder 630. Durch die Verzögerung aufgrund der elastischen Verformung der Druckfeder 630 wird eine Verzögerungszeit in Bezug auf das Ein- und Ausschalten des Mikroschalters 300 übernimmt die zusätzliche Feder 630 die Einstellung der Verzögerungszeit analog dem elastischen Anschlag 422 in den Ausführungsformen gemäß den Figuren 4a-4b.

Wie bei der Ausgestaltung gemäß den Figuren 4a-4b wird durch die zusätzlich eingebrachte Druckfeder 630 ein nicht so häufiges Aus- und Einschalten der Membranpumpe bewirkt und auf diese Art und Weise erheblich Energie eingespart. Vorteil der Ausgestaltung mit der Druckfeder 630 gegenüber der Ausgestaltung mit einer Blattfeder 422, wie in den Figuren 4a-4b ist, dass der Bereich zwischen Ein- und Ausschalten der Membranpumpe mittels des Mikroschalters vergrößert wird, insbesondere kann gegenüber der Version in Figur 4a und 4b die Verzögerungszeit über einen größeren Bereich eingestellt werden.

Wie bei der Ausführungsform gemäß der Figuren 4a-4b ist das Aufnahmegehäuse 180 zur Aufnahme von Speichereinrichtungen 182 in dem Gehäuse mit der erfindungsgemäßen Einrichtung 199 bzw. Vorrichtung mit der erfindungsgemäßen Einrichtung 199 durch eine Überwurfmutter 510 verbunden.

Wie in der Schnittdarstellung C-C in Figur 5b ausgeführt, umfasst das Aufnahmegehäuse zwei Schlitze 520.1, 520.2 zur Aufnahme von Stiften 530.1, 530.2 des Einsatzes, womit eine Fixierung des Aufnahmegehäuses bei der Montage des Aufnahmegehäuses 180 an einer erfindungsgemäßen Vorrichtung 199 mit Hilfe der Überwurfmutter 510.

Das Wechseln von Batterien bzw. Akkumulatoren, die im Aufnahmegehäuse 180 aufgenommen werden, ist bei einer derartigen Ausgestaltung besonders einfach.

Der Einsatz gemäß der Erfindung findet bevorzugt bei Druckbehältern Verwendung anstelle beispielsweise einer Handpumpe.

Der kompakte Einsatz ist gegenüber einer Handpumpe leicht austauschbar und kann daher auch als Zubehörteil für bereits vorhandene Druckbehälter angeboten werden. Des Weiteren kann der Füllstand deutlich erhöht werden. Während beispielsweise bei einer Handpumpe das Verhältnis V_{Sprüh} / V_{Gas} im Bereich 2 bis 6 liegt kann dieses Verhältnis bei Verwendung eines erfindungsgemäßen Einsatzes mit einer elektrischen Pumpe auf V_{Sprüh} / V_{Gas} zwischen 6 und 15 erhöht werden. Beispielsweise kann bei Verwendung eines 7l Drucksprühgerätes das Volumen V_{Sprüh} = 6,5l betragen und das Volumen V_{Gas} = 0,5l bei Einsatz einer elektrischen Pumpe, wohingegen bei einem 7l Druckbehälter mit Handpumpe das Volumen V_{Sprüh} = 5l und V_{Gas} = 2l ist.

Die Erfindung umfasst die nachfolgenden Aspekte, die in den Sätzen niedergelegt sind.
1. Einsatz (100) für einen Druckbehälter (3)
   mit einer elektrischen Pumpe (170), insbesondere einer Membranpumpe;
   einem Ein-/Ausschalter (190);
   dadurch gekennzeichnet, dass
   der Einsatz (100) des Weiteren einen Mikroschalter (300) und eine Einrichtung (199) umfasst, die derart aufgebaut ist, dass der Mikroschalter (300) bei Überschreiten eines Maximaldruckes in dem Druckbehälter (3) betätigt und die elektrische Pumpe (170) außer Betrieb gesetzt wird und bei Unterschreiten eines Minimaldruckes in dem Druckbehälter der Mikroschalter (300) freigegeben und die elektrische Pumpe in Betrieb gesetzt wird.
2. Einsatz nach Satz 1, dadurch gekennzeichnet, dass
   die Einrichtung (199) eine Membran (310) sowie einen Stößel (320) mit Anschlag (322), insbesondere einem elastischen Anschlag (422) und/oder wenigstens eine Druckfeder (330, 630) umfasst.
3. Einsatz nach Satz 2, dadurch gekennzeichnet, dass
   die Membran (310), der Stößel (320) und die wenigstens eine Druckfeder (330) derart angeordnet sind, dass bei Überschreiten des Maximaldruckes in dem Druckbehälter (3) durch Verformung der Membran (310) der Stößel (320) gegen die Federkraft der wenigstens einen Druckfeder (330, 630) in vertikaler Richtung (R) bewegt und der Mikroschalter (300) betätigt und die elektrische Pumpe (170) außer Betrieb gesetzt wird.
4. Einsatz nach einem der Sätze 1 bis 3, dadurch gekennzeichnet, dass die Membran (310), der Stößel (320) und die wenigstens eine Druckfeder (330, 630) derart angeordnet sind, dass bei Unterschreiten des Minimaldruckes in dem Druckbehälter (3) der Stößel sich aufgrund der Federkraft der wenigstens einen Druckfeder (330, 630) in vertikaler Richtung bewegt und der Mikroschalter (300) freigegeben und die elektrische Pumpe (170) in Betrieb gesetzt wird.
5. Einsatz nach einem der Sätze 1 bis 4, dadurch gekennzeichnet, dass der Einsatz eine Justageeinrichtung zur Justage der Membran umfasst.
6. Einsatz nach einem der Sätze 1 bis 5, dadurch gekennzeichnet, dass der Einsatz ein Aufnahmegehäuse (180) für eine elektrische Speichereinrichtung (182) umfasst, wobei das Aufnahmegehäuse (180) bevorzugt unterhalb der elektrischen Pumpe (170) angeordnet ist.
7. Einsatz nach einem der Sätze 1 bis 6, dadurch gekennzeichnet, dass das Aufnahmegehäuse (180) eine Kontakteinheit (184) zur Herstellung eines elektrischen Kontaktes zwischen der Speichereinrichtung (182) und der elektrischen Pumpe (170) umfasst, wobei die Kontakteinheit (184) in einem Material wasserdicht eingegossen ist.
8. Drucksprühgerät (1) mit einem Druckbehälter (3), dadurch gekennzeichnet, dass
   der Druckbehälter (3) einen Einsatz (100) gemäß einem der Ansprüche 1 bis 7 umfasst.
9. Drucksprühgerät nach Satz 8, dadurch gekennzeichnet, dass der Einsatz einen Gasauslass (200) zur Umgebung und einen Gaseinlass (204) in dem Druckbehälter umfasst.
10. Verfahren zum Aufbau und zum Halten eines Ausbringdruckes in einem Drucksprühgerät (1) mit einem Einsatz (100) gemäß einem der Sätze 1 bis 8, umfassend folgende Schritte:
   die elektrische Pumpe (170) wird mittels des Ein-/Ausschalters (190) eingeschaltet;
   es wird durch die Pumpe (170) ein Maximaldruck von bevorzugt 2 bar aufgebaut;
   sobald der Maximaldruck überschritten ist, wird mit Hilfe der im Einsatz vorgesehenen Einrichtung ein Mikroschalter (300) betätigt und die elektrische Pumpe (170) außer Betrieb gesetzt;
   bei Unterschreiten eines Minimaldruckes in dem Druckbehälter (3) wird der Mikroschalter (300) freigegeben und die elektrische Pumpe (170) erneut in Betrieb gesetzt.

## Patentansprüche

1. Drucksprühgerät mit einem Druckbehälter (3), wobei der Druckbehälter (3) einen Einsatz (100) aufweist, der eine elektrische Pumpe (170) sowie einen Ein-/Ausschalter (190) aufweist;
**dadurch gekennzeichnet, dass**
der Einsatz (100) des Weiteren einen Mikroschalter (300) und eine Einrichtung (199) umfasst, die derart aufgebaut ist, dass der Mikroschalter (300) bei Überschreiten eines Maximaldruckes in dem Druckbehälter (3) betätigt und die elektrische Pumpe (170) außer Betrieb gesetzt wird und bei Unterschreiten eines Minimaldruckes in dem Druckbehälter (3) der Mikroschalter (300) freigegeben und die elektrische Pumpe (170) in Betrieb gesetzt wird und die Einrichtung (199) eine Membran (310) sowie einen Stößel (320) mit einem elastischen Anschlag (422) und einer Druckfeder (330) oder mit einem starren Anschlag (322) und einer Druckfeder (330)
sowie eine weitere Druckfeder (630) zwischen der Membran (310) und dem Stößel (320) umfasst, wobei der Einsatz (100) des Weiteren eine Justageeinrichtung zur Justage der Membran (310) aufweist.

2. Drucksprühgerät nach Anspruch 1,
**dadurch gekennzeichnet, dass**
die Membran (310), der Stößel (320) und die wenigstens eine Druckfeder (330) derart angeordnet sind, dass bei Überschreiten des Maximaldruckes in dem Druckbehälter (3) durch Verformung der Membran (310) der Stößel (320) gegen die Federkraft der wenigstens einen Druckfeder (330, 630) in vertikaler Richtung (R) bewegt und der Mikroschalter (300) betätigt und die elektrische Pumpe (170) außer Betrieb gesetzt wird.

3. Drucksprühgerät nach einem der Ansprüche 1 bis 2,
**dadurch gekennzeichnet, dass**
die Membran (310), der Stößel (320) und die wenigstens eine Druckfeder (330, 630) derart angeordnet sind, dass bei Unterschreiten des Minimaldruckes in dem Druckbehälter (3) der Stößel sich aufgrund der Federkraft der wenigstens einen Druckfeder (330, 630) in vertikaler Richtung bewegt und der Mikroschalter (300) freigegeben und die elektrische Pumpe (170) in Betrieb gesetzt wird.

4. Drucksprühgerät nach einem der Ansprüche 1 bis 3,
**dadurch gekennzeichnet, dass**
der Einsatz ein Aufnahmegehäuse (180) für eine elektrische Speichereinrichtung (182) umfasst, wobei das Aufnahmegehäuse (180) bevorzugt unterhalb der elektrischen Pumpe (170) angeordnet ist.

5. Drucksprühgerät nach Anspruch 4,
**dadurch gekennzeichnet, dass**
das Aufnahmegehäuse (180) eine Kontakteinheit (184) zur Herstellung eines elektrischen Kontaktes zwischen der Speichereinrichtung (182) und der elektrischen Pumpe (170) umfasst, wobei die Kontakteinheit (184) in einem Material wasserdicht eingegossen ist.

6. Drucksprühgerät nach einem der Ansprüche 1 bis 5,
**dadurch gekennzeichnet, dass**
der Einsatz einen Gasauslass (200) zur Umgebung und einen Gaseinlass (204) in dem Druckbehälter umfasst.

7. Verfahren zum Aufbau und zum Halten eines Ausbringdruckes in einem Drucksprühgerät (1) mit einem Einsatz (100) gemäß einem der Ansprüche 1 bis 6 umfassend folgende Schritte:
die elektrische Pumpe (170) wird mittels des Ein-/Ausschalters (190) eingeschaltet;
es wird durch die Pumpe (170) ein Maximaldruck von bevorzugt 2 bar aufgebaut;
sobald der Maximaldruck überschritten ist, wird mit Hilfe der im Einsatz (100) vorgesehenen Einrichtung (199) ein Mikroschalter (300) betätigt und die elektrische Pumpe (170) außer Betrieb gesetzt;
bei Unterschreiten eines Minimaldruckes in dem Druckbehälter (3) wird der Mikroschalter (300) freigegeben und die elektrische Pumpe (170) erneut in Betrieb gesetzt.

## Claims

1. A pressure spraying device having a pressure container (3), wherein the pressure container (3) comprises an insert (100) having an electric pump (170) and an on-off switch (190), **characterized in that** the insert (100) further comprises a microswitch (300) and a device (199) which is arranged in such a way that the microswitch (300) is actuated upon exceeding a maximum pressure in the pressure container (3) and the electric pump (170) is put out of operation, and the microswitch (300) is released upon falling below a minimum pressure in the pressure container (3) and the electric pump (170) is put into operation, and the device (199) comprises a membrane (310) and a plunger (320) with an elastic stop (422) and a compression spring (330) or with a rigid stop (322) and a compression spring (330) and a further compression spring (630) between the membrane (310) and the plunger (320), wherein the insert (100) further comprises an adjusting device for adjusting the membrane (310).

2. A pressure spraying device according to claim 1, **characterized in that** the membrane (310), the plunger (320) and the at least one compression spring (330) are arranged in such a way that upon exceeding the maximum pressure in the pressure container (3) by deformation of the membrane (310) the plunger (320) is moved against the spring force of the at least one compression spring (330, 630) in the vertical direction (R) and the microswitch (300) is actuated and the electric pump (170) is put out of operation.

3. A pressure spraying device according to claim 1 to 2, **characterized in that** the membrane (310), the plunger (320) and the at least one compression spring (330, 630) are arranged in such a way that upon falling beneath the minimum pressure in the pressure container (3) the plunger (320) moves as a result of the spring force of the at least one compression spring (330, 630) in the vertical direction and the microswitch (300) is released and the electric pump (170) is put into operation.

4. A pressure spraying device according to one of the claims 1 to 3, **characterized in that** the insert comprises a receiving housing (180) for an electrical storage device (182), wherein the receiving housing (180) is preferably arranged beneath the electric pump (170).

5. A pressure spraying device according to claim 4, **characterized in that** the receiving housing (180) comprises a contact unit (184) for producing an electric contact between the storage device (182) and the electric pump (170), wherein the contact unit (184) is cast into a material in a water-proof manner.

6. A pressure spraying device according to one of the claims 1 to 5, **characterized in that** the insert comprises a gas outlet (200) to the ambient environment and a gas inlet (204) into the pressure container.

7. A method for building up and holding a discharge pressure in a pressure spraying device (1) with an inert (100) according to one of the claims 1 to 6, comprising the following steps:
the electric pump (170) is switched on by means of the on-off switch (190);
a maximum pressure of preferably 2 bar is built up by the pump (170);
once the maximum pressure has been exceeded, a microswitch (300) is actuated by means of the device (199) provided in the insert (100) and the electric pump (170) is put out of operation;
the microswitch (300) is released upon falling beneath a minimum pressure in the pressure container (3) and the electric pump (170) is put into operation again.

## Revendications

1. Appareil de pulvérisation sous pression avec un réservoir sous pression (3), dans lequel le réservoir sous pression (3) présente un insert (100) qui comporte une pompe électrique (170) et un interrupteur marche/arrêt (190), **caractérisé en ce que** l'insert (100) comprend en outre un microrupteur (300) et un dispositif (199) construit de telle sorte que le microrupteur (300) soit actionné lorsqu'une pression maximale est dépassée dans le réservoir sous pression (3) et mette la pompe électrique (170) hors service et que, lorsque la pression dans le réservoir sous pression (3) est inférieure à une pression minimale, le microrupteur (300) soit libéré et la pompe électrique (170) mise en service, et le dispositif (199) comprend une membrane (310) et un poussoir (320) avec une butée élastique (422) et un ressort de compression (330) ou avec une butée rigide (322) et un ressort de compression (330) ainsi qu'un autre ressort de compression (630) entre la membrane (310) et le poussoir (320), l'insert (100) comportant en outre un dispositif d'ajustement pour l'ajustement de la membrane (310).

2. Appareil de pulvérisation sous pression selon la revendication 1, **caractérisé en ce que** la membrane (310), le poussoir (320) et l'au moins un ressort de compression (330) sont disposés de telle manière que lorsque la pression maximale est dépassée dans le réservoir sous pression (3), le poussoir (320) est déplacé par la déformation de la membrane (310) contre la force de l'au moins un ressort de compression (330, 630) dans le sens vertical (R) et actionne le microrupteur (300) et la pompe électrique (170) est mise hors service.

3. Appareil de pulvérisation sous pression l'une des revendications 1 à 2, **caractérisé en ce que** la membrane (310), le poussoir (320) et l'au moins un ressort de compression (330, 630) sont disposés de telle manière que lorsque la pression dans le réservoir sous pression (3) baisse en dessous de la pression minimale, le poussoir se déplace dans le sens vertical sous l'effet de la force de l'au moins un ressort de compression (330, 630) et le microrupteur (300) soit libéré et la pompe électrique (170) mise en service.

4. Appareil de pulvérisation sous pression selon l'une des revendications 1 à 3, **caractérisé en ce que** l'insert comprend un boîtier de logement (180) pour un dispositif d'accumulation électrique (182), lequel boîtier de logement (180) est de préférence disposé en dessous de la pompe électrique (170).

5. Appareil de pulvérisation sous pression selon la revendication 4, **caractérisé en ce que** le boîtier de logement (180) comprend une unité de contact (184) pour établir un contact électrique entre le dispositif d'accumulation (182) et la pompe électrique (170), laquelle unité de contact (184) est enrobée d'un matériau de manière étanche à l'eau.

6. Appareil de pulvérisation sous pression selon l'une des revendications 1 à 5, **caractérisé en ce que** l'insert comprend une sortie de gaz (200) vers l'environnement et une entrée de gaz (204) dans le réservoir sous pression.

7. Procédé pour constituer et maintenir une pression d'éjection dans un appareil de pulvérisation sous pression (1) avec un insert (100) selon l'une des revendications 1 à 6, comprenant les étapes suivantes :
la pompe électrique (170) est démarrée au moyen d'un interrupteur marche/arrêt (190) ;
une pression maximale de 2 bars de préférence est constituée par la pompe (170) ;
dès que la pression maximale est dépassée, un microrupteur (300) est actionné à l'aide du dispositif (199) prévu dans l'insert (100) et la pompe électrique (170) est mise hors service ;
quand la pression dans le réservoir sous pression (3) baisse en dessous d'une pression minimale, le microrupteur (300) est libéré et la pompe électrique (170) est remise en service.
